# FASCICULE DE BREVET EUROPEEN

(11) **EP 1 667 415 B1**
(45) Date de publication et mention de la délivrance du brevet: **13.08.2008**
(21) Numéro de dépôt: 05292527.8
(22) Date de dépôt: 29.11.2005
(51) Int. Cl.: H04M 3/58

(54) **Procédé et système de transfert d'appels centralisé**
Verfahren und System zur zentralisierten Anrufübergabe
Method and system for centralised call transfer

(30) Priorité: 06.12.2004 FR 0412968
(43) Date de publication de la demande: 07.06.2006
(73) Titulaire: FRANCE TELECOM, 75015 Paris (FR)
(72) Inventeur: Guillard, Michel, 94230 Cachan (FR); Saude, Pierre, 78220 Viroflay (FR); Vicendo, Frédéric, 78570 Andresy (FR)
(74) Mandataire: Joly, Jean-Jacques

(56) Documents cités:
- WO-A-00/76191
- WO-A-99/62274
- US-B1- 6 614 897
- GELDER VAN J ET AL: "PRIVATE NETWORKING WITH SOPHO-TBX AND SOPHOS SYSTEMS" PHILIPS TELECOMMUNICATION REVIEW, PHILIPS TELECOMMUNICATIE INDUSTRIE N.V. HILVERSUM, NL, vol. 43, no. 4, décembre 1985 (1985-12), pages 237-252, XP002032868

## Description

La présente invention concerne les services téléphoniques et plus particulièrement, les services de transfert d'appels permettant à un premier correspondant en communication téléphonique avec un second correspondant de transférer l'appel en cours vers un troisième correspondant situé sur un autre site.

Elle s'applique notamment, mais non exclusivement aux réseaux téléphoniques dits "intelligents" dans lequel l'un des deux correspondants en communication accède au réseau téléphonique par l'intermédiaire d'un équipement du type PABX (Private Automatic Branch eXchange), SVI (Serveur Vocal Interactif), ou ACD (Automatic Call Distribution).

Actuellement, la technique la plus répandue pour transférer un appel téléphonique établi entre deux correspondants vers un troisième correspondant consiste à utiliser ce que l'on appelle l'aboutement d'appel au niveau du site d'un premier des deux correspondants en communication. Cette technique consiste à générer un second appel vers un troisième correspondant, au niveau de l'équipement (de type PABX, SVI ou ACD) du premier correspondant en communication, et ensuite à mettre le second correspondant en communication avec le troisième correspondant, à l'aide de l'équipement. Cette technique est applicable aux transferts d'appels dits "accompagnés" c'est-à-dire avec possibilité de conversation préalable entre le premier et le troisième correspondant, mais également aux transferts d'appels dits "aveugles", c'est-à-dire sans cette communication préalable.

Cette technique présente l'inconvénient de nécessiter que l'équipement établisse deux communications durant toute la communication avec le troisième correspondant, ce qui implique la consommation supplémentaire de capacités de raccordement au niveau de l'équipement, ainsi que le coût d'une communication supplémentaire.

Il existe également une technique dite de transfert d'appel par reroutage qui est applicable à la fois aux transferts accompagnés et aveugles. Cette technique consiste à émettre vers le réseau depuis l'équipement (de type PABX, SVI ou ACD) d'un premier des deux correspondants en communication, une commande de transfert (également appelée "reroutage d'appel"). Cette commande est interprétée par le réseau qui établit un appel vers le troisième correspondant et qui met celui-ci en communication avec le second correspondant. Le premier correspondant relié à l'équipement se trouve alors libéré de la communication, de sorte qu'il n'existe plus qu'une seule communication. Dans les réseaux RNIS (Réseau Numérique à Intégration de Services), cette commande de transfert est encapsulée dans le message "facilité" prévu par le protocole RNIS ou émise dans la bande via une séquence DTMF (Dual Tone Multi Frequency). Or les PABX ne peuvent pas émettre de message "facilité", seuls les SVI sont capables de gérer un tel message. Par ailleurs, l'usage d'une séquence DTMF nécessite de conserver dans le réseau durant toute la durée de la communication des détecteurs DTMF pour pouvoir interpréter une éventuelle commande de transfert émise par l'un des correspondants. Or de tels détecteurs sont des ressources vocales onéreuses.

On peut également citer la technique de transfert d'appel décrite dans le document de brevet US 6, 614, 897.

La présente invention a pour but de supprimer ces inconvénients en proposant un mécanisme de transfert d'appel aveugle ou accompagné qui soit activable avec les fonctions de base prévues dans la plupart des équipements de type PABX, ACD et SVI existants. Cet objectif est atteint par la prévision d'un procédé de transfert d'appel pour transférer un appel en cours entre un premier terminal et un second terminal par l'intermédiaire d'un réseau de télécommunication, vers un troisième terminal, le procédé comprenant des étapes préalables au cours desquelles le premier terminal compose un numéro d'appel du second terminal, le numéro est traité par le réseau pour acheminer l'appel vers le second terminal et ainsi établir une communication entre le premier et le second terminal.
Selon l'invention, ce procédé comprend des étapes au cours desquelles :
- le second terminal commande la mise en garde de la communication avec le premier terminal, et appelle un serveur de transfert d'appel connecté au réseau,
- une fois qu'une communication est établie entre le second terminal et le serveur de transfert d'appel, le second terminal fournit au serveur de transfert d'appel un numéro d'appel d'un troisième terminal vers lequel l'appel doit être transféré,
- le serveur de transfert d'appel émet vers le réseau une commande d'établissement d'une communication avec le troisième terminal, et
- lorsque le troisième terminal décroche, il est mis en communication avec le premier terminal, et les communications du second terminal avec le réseau et le serveur de transfert d'appel sont interrompues.

Selon un mode de réalisation de l'invention, au moment de l'établissement de la communication entre le premier et le second terminal, le réseau attribue à la communication un identifiant d'appel qui est transmis au second terminal, et une fois que la communication est établie entre le second terminal et le serveur de transfert d'appel, le second terminal fournit au serveur de transfert d'appel l'identifiant de la communication entre le premier et le second terminal.

Selon un mode de réalisation de l'invention, le réseau attribue un identifiant d'appel à la communication si le numéro d'appel composé par le premier terminal est un numéro d'appel spécial du second terminal.

Selon un mode de réalisation de l'invention, l'identifiant de la communication entre le premier et le second terminal est transmis au second terminal et au serveur de transfert d'appel dans la signalisation d'appel du protocole RNIS, ou sous la forme de signaux DTMF.

Selon un mode de réalisation de l'invention, une communication est établie entre le second terminal et le troisième terminal par l'intermédiaire du serveur de transfert d'appel, à la suite de l'émission vers le réseau d'une commande d'établissement d'une communication avec le troisième terminal.

Selon un mode de réalisation de l'invention, le second terminal bascule entre la communication avec le premier terminal et la communication avec le troisième terminal par l'intermédiaire du serveur de transfert d'appel, à la suite d'une commande de va-et-vient émise par le second terminal.

L'invention concerne également un serveur de transfert d'appel pour transférer un appel en cours entre un premier terminal et un second terminal par l'intermédiaire d'un réseau de télécommunication, vers un troisième terminal. Selon l'invention, le serveur comprend des moyens de traitement conçus pour :
- recevoir une commande de transfert provenant du second terminal par l'intermédiaire du réseau, la commande de transfert comportant un numéro d'appel d'un troisième terminal vers lequel le transfert doit être effectué,
- émettre vers le réseau une commande d'établissement d'une communication avec le troisième terminal vers lequel le transfert doit être effectué, à la suite de la réception de la commande de transfert, et
- détecter le décrochage du troisième terminal, et à la suite de cette détection, commander au réseau la mise en communication du troisième terminal avec le premier terminal, et libérer la communication avec le second terminal.

Selon un mode de réalisation de l'invention, les moyens de traitement sont en outre conçus pour recevoir avec la commande de transfert un identifiant de la communication entre le premier et le second terminal.

Selon un mode de réalisation de l'invention, les moyens de traitement sont en outre conçus pour établir une communication avec le troisième terminal et mettre en communication celui-ci avec le second terminal.

Selon un mode de réalisation de l'invention, les moyens de traitement sont en outre conçus pour émettre des messages vocaux à destination du second terminal.

Selon un mode de réalisation de l'invention, le serveur de transfert d'appel comprend des moyens pour se connecter à un point de commande de services de réseau intelligent connecté au réseau, les moyens de traitement étant conçus pour envoyer au point de commande de services des commandes d'acheminement d'appel, des commandes de transfert d'appel, et des commandes de libération d'appel, et pour recevoir du point de commande de services des signaux de libération d'appel et des avis d'échec à la suite d'une commande d'établissement d'appel.

L'invention concerne en outre un terminal comprenant :
- des moyens pour se connecter à un réseau de télécommunication,
- des moyens pour établir une communication avec un second terminal par l'intermédiaire du réseau de télécommunication, et
- des moyens pour commander la mise en garde d'une communication établie avec le second terminal par l'intermédiaire du réseau de télécommunication.

Selon l'invention, le terminal comprend en outre :
- des moyens pour recevoir un identifiant d'appel à la suite de l'établissement de la communication avec le second terminal, et
- des moyens pour appeler un serveur de transfert d'appel connecté au réseau, et lui transmettre l'identifiant d'appel, et un numéro d'appel d'un troisième terminal, à la suite de la mise en garde du second terminal.

L'invention concerne encore un point de commande de service contrôlant un commutateur de transit d'un réseau de télécommunications pour assurer des services de type Réseau Intelligent, comprenant des moyens pour commander le commutateur de transit pour qu'il établisse un lien de communication avec un terminal connecté au réseau, par l'intermédiaire d'un commutateur de raccordement du réseau, auquel le terminal est connecté. Selon l'invention, le point de raccordement comprend en outre :
- des moyens pour recevoir un numéro spécial d'appel émis par un premier terminal pour établir une communication avec un second terminal,
- des moyens pour traduire le numéro spécial reçu en un numéro d'appel du second terminal, et
- des moyens pour attribuer un identifiant d'appel à la communication entre le premier et le second terminal, à la suite de la réception du numéro spécial du second terminal.

Il en résulte que vue du réseau, la communication initiale entre les terminaux A et B a été transformée en une unique communication entre les terminaux A et C, sans que l'équipement 5 du terminal B ait à traiter une signalisation particulière.

Un mode de réalisation préféré de l'invention sera décrit ci-après, à titre d'exemple non limitatif, avec référence aux dessins annexés dans lesquels :
La figure 1 représente schématiquement un réseau téléphonique auxquels sont connectés différents abonnés, ainsi qu'un système de transfert d'appel selon l'invention ;
Les figures 2a à 2c illustrent sous la forme d'organigrammes différentes étapes du procédé selon l'invention, mis en oeuvre par le système de transfert d'appel montré sur la figure 1 ;
La figure 3 représente schématiquement un réseau téléphonique auxquels sont connectés différents abonnés, ainsi qu'un système de transfert d'appel selon une variante de l'invention ;
Les figures 4a à 4g illustrent sous la forme d'organigrammes différentes étapes du procédé selon l'invention mis en oeuvre par le système de transfert d'appel montré sur la figure 3.

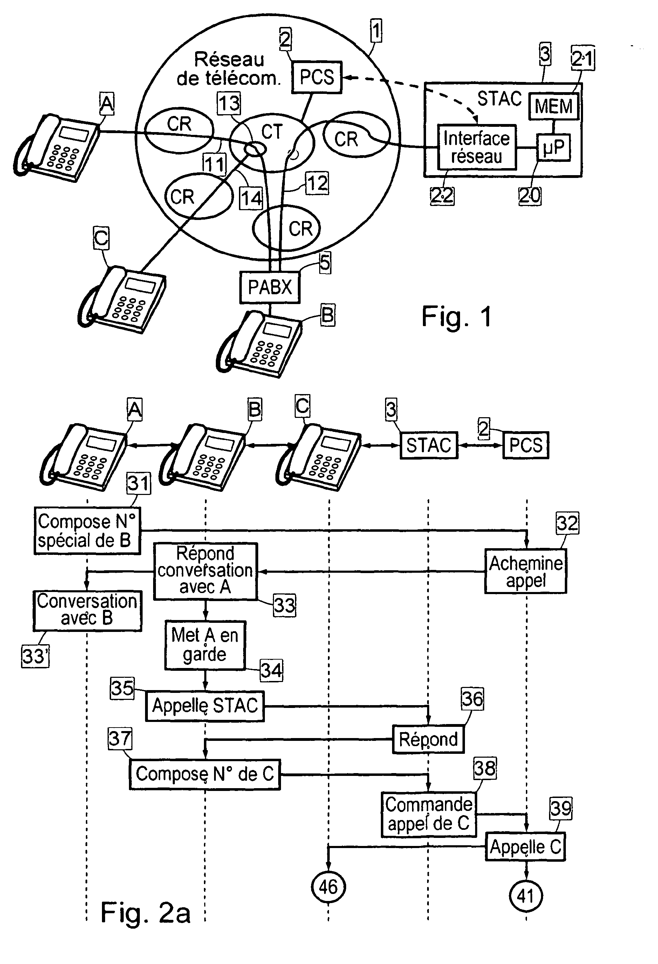

La figure 1 représente un réseau téléphonique 1 auxquels sont raccordés différents terminaux d'abonnés A, B, C, le terminal B étant raccordé au réseau par l'intermédiaire d'un l'équipement 5 de type PABX, SVI ou ACD. Le réseau comprend d'une manière classique des commutateurs de rattachement CR pour établir des connexions avec les terminaux des abonnés, un commutateur de transit CT permettant d'établir des connexions entre les commutateurs de rattachement CR, de manière à établir une communication entre deux terminaux d'abonnés ou davantage, et un point de commande de Service (PCS) 2 contrôlant le commutateur de transit CT pour assurer des services de type Réseau Intelligent.

Pour assurer un service de transfert d'appel, l'invention met en oeuvre un serveur de transfert d'appel centralisé (STAC) 3 connecté au réseau 1 par l'intermédiaire d'un commutateur de raccordement CR, ainsi qu'au PCS.
D'une manière classique, le serveur 3 comprend un processeur 20, des mémoires 21, et une interface réseau 22 conçue pour établir plusieurs communications simultanées avec le réseau 1.

Le serveur 3 est conçu et programmé pour recevoir et interpréter des demandes de transfert reçues sous forme vocale ou de signaux DTMF, ou encore insérées dans la signalisation RNIS dite "d'usager à usager". La demande de transfert d'appel reçue par le serveur 3 contient une information lui permettant d'identifier la communication entre deux terminaux A et B d'où provient la demande de transfert d'appel, ainsi que le numéro de téléphone du terminal C vers lequel l'appel doit être transféré. A l'aide de cette information, le serveur 3 émet vers le réseau 1 une commande de transfert pour établir une communication entre le terminal C vers lequel l'appel doit être transféré et l'un des deux des terminaux A, B en communication, d'où provient la demande de transfert d'appel.

Les figures 1 et 2a à 2c illustrent le cas d'un transfert d'appel aveugle selon l'invention, c'est-à-dire sans que le terminal B ayant émis la commande de transfert soit mis en communication avec le terminal C vers lequel l'appel doit être transféré.

Le principe du transfert d'appel aveugle selon l'invention est le suivant. Le terminal A compose un numéro d'accès au terminal B qui est transmis au PCS. Le PCS attribue alors un identifiant d'appel à la communication entre les terminaux A et B, et commande l'acheminement de l'appel du terminal A vers le terminal B en positionnant dans la signalisation du réseau l'identifiant d'appel qu'il a attribué. Cet identifiant est placé dans le champ NDS (Numéro de Désignation Supplémentaire) ou SUU (Signalisation d'Usager à Usager) de la signalisation d'appel du protocole RNIS.

L'accès au PCS lors de l'appel lancé par le terminal A peut être effectué systématiquement, ou par exemple à l'aide d'un numéro spécial d'accès au terminal B, également appelé numéro d'accès de service (NAS). Le réseau est alors conçu pour reconnaître de tels numéros spéciaux et orienter les appels correspondants vers le PCS qui traduit ces numéros spéciaux en numéros d'appel, et attribue des identifiants d'appel aux communications correspondantes.

Une fois que la communication entre les terminaux A et B est établie, l'utilisateur du terminal B peut transférer l'appel vers un terminal C d'un autre utilisateur raccordé au réseau 1. A cet effet, il met le terminal appelant A en garde sur son équipement 5 et appelle le serveur 3. Lorsque le serveur 3 répond à l'appel, l'utilisateur du terminal B communique au serveur l'identifiant de la communication et le numéro de téléphone du terminal C vers lequel l'appel doit être transféré. La communication de ces informations peut être effectuée en signaux DTMF, en vocal ou par l'intermédiaire de données échangées dans la signalisation SUU du protocole RNIS. Le serveur 3 communique alors au réseau 1 la demande de transfert. Sur réception de cette demande, le réseau établit un demi-appel (leg) 14 vers le terminal C, c'est-à-dire une liaison entre le réseau et le terminal C. Sur réponse du terminal C, le terminal A qui était en garde sur l'équipement 5 du terminal B est mis en relation avec le terminal C. Le demi-appel vers le terminal B (entre le réseau et le terminal B), qui a été établi pour mettre en communication les terminaux A et B, est alors libéré. Lorsque le terminal C décroche, un compte-rendu de transfert d'appel est transmis par le réseau au serveur 3, puis est communiqué par ce dernier au terminal B, par exemple sous forme vocale.

Il en résulte que vue du réseau, la communication initiale entre les terminaux A et B a été transformée en une unique communication entre les terminaux A et C, sans que l'équipement 5 du terminal B ait à traiter une signalisation particulière.

La figure 2a illustre la procédure d'établissement d'une communication entre les terminaux A et B.
A la première étape 31 de cette procédure, l'utilisateur du terminal A compose le numéro spécial (NAS) d'appel du terminal B. Ce numéro spécial est détecté par le commutateur de transit CT qui l'envoie vers le PCS. A l'étape suivante 32, le PCS traduit le numéro spécial reçu en numéro d'appel du terminal B, attribue un identifiant à l'appel, et commande le commutateur de transit CT pour qu'il établisse une communication entre les commutateurs de raccordement CR des terminaux A et B. Cette opération entraîne la création d'un ticket de facturation 13 au niveau du commutateur de transit ou du PCS, et d'une communication 11 entre les terminaux A et B déclenchant la sonnerie du terminal B. Si le terminal B décroche, il reçoit la signalisation NDS ou SUU contenant l'identifiant de la communication et est mis en communication avec le terminal A (étapes 33, 33').

Lorsque l'utilisateur du terminal B décide de transférer l'appel vers le terminal C, il commande à l'étape 34 son équipement 5 pour placer le terminal A en attente (mise en garde), et compose le numéro d'appel du serveur 3 (étape 35). Cette action a pour effet d'établir au niveau du réseau une communication 12 entre le terminal B et le serveur 3. A l'étape 36 suivante, le serveur 3 décroche et envoie au terminal B un message vocal demandant à l'utilisateur de composer l'identifiant de l'appel reçu à l'étape 33 et le numéro du correspondant vers lequel l'appel doit être transféré.

A l'étape suivante 37, l'utilisateur du terminal B compose l'identifiant de la communication avec le terminal A et le numéro d'appel du terminal C, à l'aide des touches du clavier du terminal, en surnumérotation (signaux DTMF). Ces informations sont reçues par le serveur 3 à l'étape suivante 38 qui émet une commande destinée au PCS d'établissement d'un lien de communication vers le terminal C. Cette commande est reçue à l'étape 39 par le PCS qui commande le commutateur de transit CT pour qu'il établisse un lien de communication 14 avec le terminal C en liaison avec le ticket de facturation 13 correspondant à l'appel du terminal A vers le terminal B.

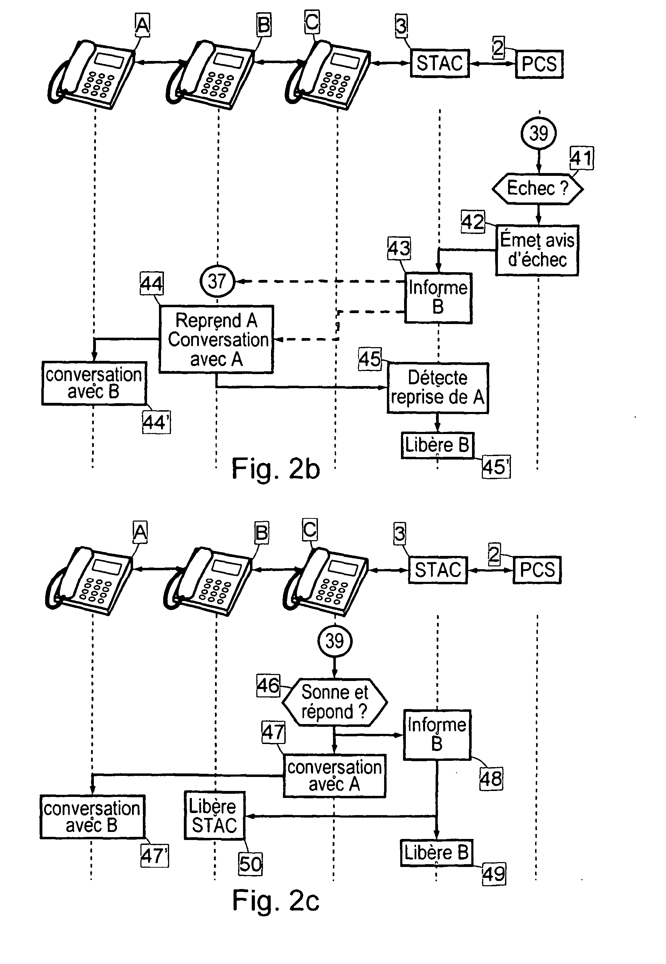

La procédure se poursuit conformément à la figure 2b en cas d'échec de l'établissement du lien de communication avec le terminal C, c'est-à-dire si le terminal C est occupé ou si le numéro d'appel du terminal C est erroné, ou encore si le terminal C ne décroche pas à l'issue d'un laps de temps prédéfini (étape 41). A l'étape suivante 42, le PCS émet un avis d'échec à destination du serveur 3. A l'étape suivante 43, le serveur 3 retransmet cet avis d'échec sous forme vocale au terminal B. L'utilisateur du terminal B dispose alors de deux options : soit il reprend la procédure à l'étape 37 en recomposant le numéro d'appel du terminal C ou d'un autre terminal, soit il reprend la conversation avec l'utilisateur du terminal A. Cette dernière option est effectuée par une commande de rétro-appel appliquée à l'équipement 5 du terminal B (étape 44). Les terminaux A et B se retrouvent alors en communication aux étapes 44, 44'. Cette commande de rétro-appel est également détectée par le serveur 3 à l'étape 45 qui peut alors décider au bout d'un laps de temps prédéfini de mettre fin à la communication avec le terminal B (étape 45').

Si à la suite de l'étape 39, le terminal C sonne, la procédure se poursuit conformément à la figure 2c. Si à l'étape 46, le terminal C décroche, il se retrouve en communication avec le terminal A (étapes 47, 47'), et le serveur 3 le détecte et en informe le terminal B par un message vocal à l'étape 48. Aux étapes suivantes 49, 50, le serveur 3 libère l'appel avec le terminal B et réciproquement.

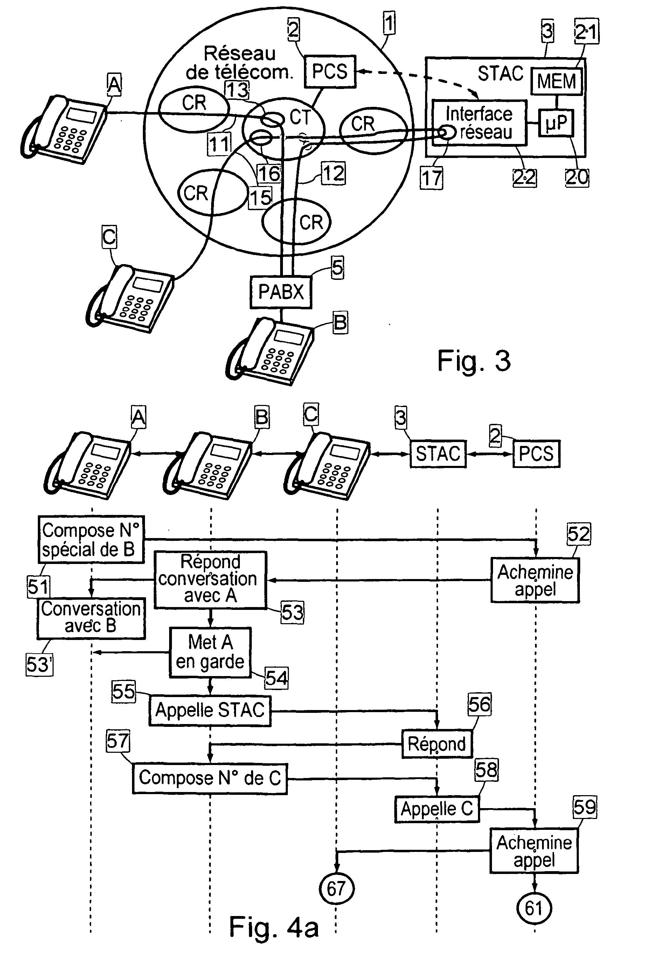

Les figures 3 et 4a à 4g illustrent le cas d'un transfert d'appel accompagné selon l'invention, c'est-à-dire au cours duquel le terminal B qui a émis la commande de transfert d'appel peut communiquer avec le terminal C vers lequel l'appel doit être transféré.

Le principe du transfert d'appel accompagné conformément à l'invention est le suivant. Comme dans le transfert d'appel aveugle, le terminal A compose un numéro spécial d'accès au terminal B, également appelé numéro d'accès de service (NAS). Le réseau achemine l'appel du terminal A vers le terminal B en positionnant dans la signalisation du réseau un identifiant d'appel attribué par le PCS. Cet identifiant est placé soit dans le champ NDS (Numéro de Désignation Supplémentaire) ou SUU (Signalisation d'Usager à Usager) de la signalisation d'appel du protocole RNIS. Lorsque l'utilisateur du terminal B souhaite transférer l'appel vers un terminal C d'un autre utilisateur raccordé au réseau 1, il met le terminal appelant A en garde sur son équipement 5 et appelle le serveur 3. Lorsque le serveur 3 répond à l'appel, une communication 12 entre le terminal B et le serveur 3 est établie et l'utilisateur du terminal B communique au serveur l'identifiant de la communication et le numéro de téléphone du terminal C vers lequel l'appel doit être transféré. La communication de ces informations peut être effectuée en signaux DTMF, en vocal ou par l'intermédiaire de données échangées dans la signalisation SUU du protocole RNIS. Le serveur 3 établit alors une communication 15 avec le terminal C et effectue un aboutement 17 entre les communications 12 et 15 pour assurer par son intermédiaire la communication entre les terminaux B et C.

L'utilisateur du terminal B peut alors effectuer des va-et-vient ou une conférence à trois entre les terminaux A et C. Il peut également commander au serveur 3 par des signaux DTMF le transfert des communications en cours avec optimisation des liens pour ne conserver qu'une communication entre les terminaux A et C. A la réception de cette commande de transfert, le serveur 3 transmet cette commande au réseau qui établit le rapprochement entre le demi-appel entre le terminal C et le réseau et le demi-appel entre le terminal A et le réseau, de manière à mettre en communication les terminaux A et C. Parallèlement, le demi-appel entre le réseau et le terminal B est libéré à la suite de la diffusion par le serveur 3 d'un message vocal de compte rendu de transfert. Vue du réseau, la communication entre les terminaux A et B a donc été transformée en une unique communication entre les terminaux A et C.

La figure 4a illustre la procédure d'établissement d'une communication entre les terminaux A et B dans le cas du transfert d'appel accompagné.
Comme précédemment, à la première étape 51 de cette procédure, l'utilisateur du terminal A compose le numéro spécial d'appel du terminal B. Ce numéro spécial est détecté par le commutateur de transit CT qui l'envoie vers le PCS. A l'étape suivante 52, le PCS traduit le numéro spécial reçu en numéro d'appel du terminal B, attribue un identifiant à l'appel, et commande le commutateur de transit CT pour qu'il établisse une communication entre les commutateurs de raccordement CR des terminaux A et B. Cette opération entraîne la création d'un ticket de facturation 13 au niveau du commutateur de transit ou du PCS, et d'une communication 11 entre les terminaux A et B déclenchant la sonnerie du terminal B. Si le terminal B décroche, il reçoit la signalisation NDS ou SUU contenant l'identifiant de la communication et est mis en communication avec le terminal A (étapes 53, 53').

Lorsque l'utilisateur du terminal B décide de transférer l'appel vers le terminal C, il commande à l'étape 54 son équipement 5 pour placer le terminal A en attente (mise en garde), et compose le numéro d'appel du serveur 3 (étape 55). Cette action a pour effet d'établir au niveau du réseau une communication 12 entre le terminal B et le serveur 3. A l'étape 56 suivante, le serveur 3 décroche et envoie au terminal B un message vocal demandant à l'utilisateur de composer l'identifiant de l'appel reçu à l'étape 53 et le numéro du correspondant vers lequel l'appel doit être transféré.

A l'étape suivante 57, l'utilisateur du terminal B compose l'identifiant de la communication avec le terminal A et le numéro d'appel du terminal C, à l'aide des touches du clavier du terminal, en surnumérotation (signaux DTMF). Ces informations sont reçues par le serveur 3 à l'étape suivante 58 qui appelle le terminal C à l'aide du numéro d'appel reçu. A l'étape suivante 59, cet appel est acheminé par le PCS qui commande le commutateur de transit CT pour qu'il établisse un lien communication 15 entre le serveur 3 et le terminal C en liaison avec un nouveau ticket de facturation 16.

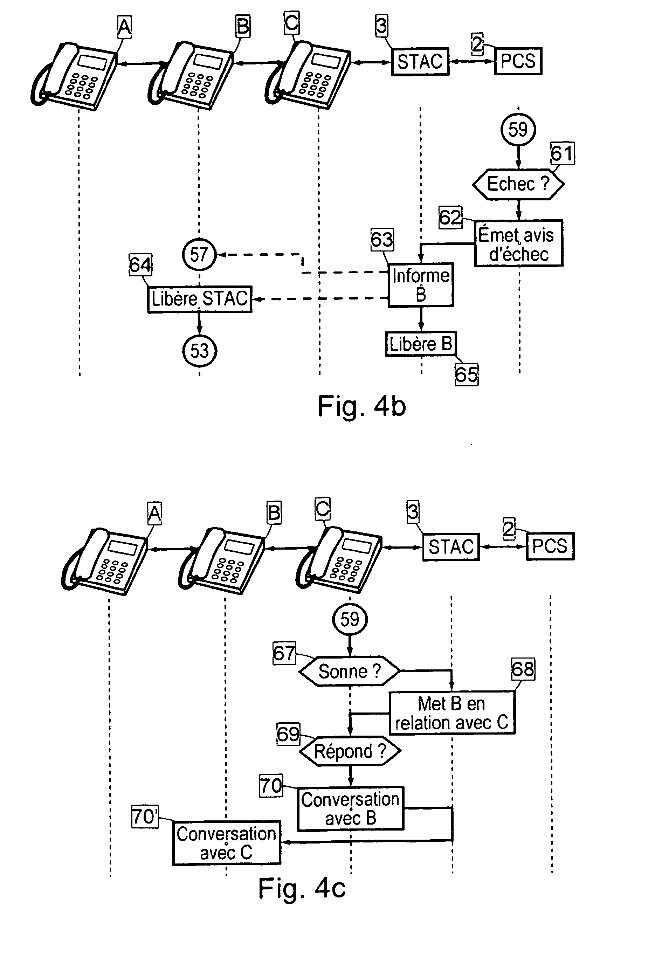

La procédure se poursuit conformément à la figure 4b en cas d'échec de l'établissement du lien de communication avec le terminal C, c'est-à-dire si le terminal C est occupé ou si le numéro d'appel du terminal C est erroné, ou encore si le terminal C ne décroche pas à l'issue d'un laps de temps prédéfini (étape 61). A l'étape suivante 62, le PCS émet un avis d'échec à destination du serveur 3. A l'étape suivante 63, le serveur 3 retransmet cet avis d'échec sous forme vocale au terminal B. L'utilisateur du terminal B dispose alors de deux options : soit il reprend la procédure à l'étape 57 en recomposant le numéro d'appel du terminal C ou d'un autre terminal, soit il reprend la conversation avec l'utilisateur du terminal A. Cette dernière option est effectuée en libérant la communication du terminal B avec le serveur 3 (étape 64) et en reprenant la communication avec le terminal A (étape 56). Parallèlement, le serveur 3 décide au bout d'un laps de temps prédéfini de mettre fin à la communication avec le terminal B (étape 65).

Si à la suite de l'étape 59, le terminal C sonne, la procédure se poursuit conformément à la figure 4c, à l'étape 67. Le serveur 3 le détecte et diffuse en transparence vers le terminal B le retour d'appel du terminal C, par aboutement 17 entre les communications 12 et 15 du terminal B vers le serveur et du serveur au terminal C. Si le terminal C décroche (étape 69), les terminaux B et C se retrouvent en communication l'un avec l'autre aux étapes 70, 70', par l'intermédiaire du serveur 3.

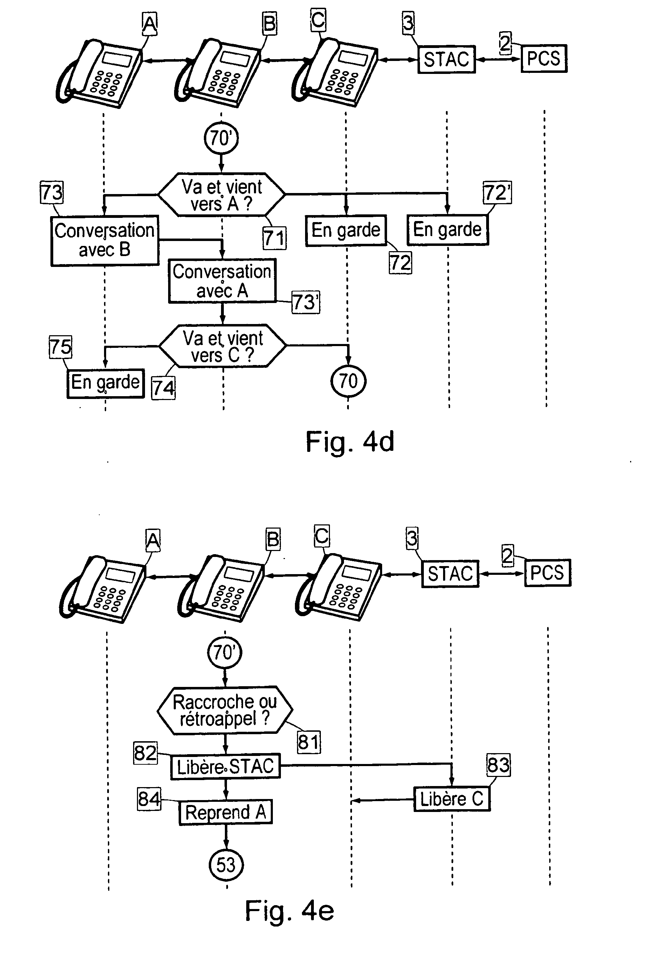

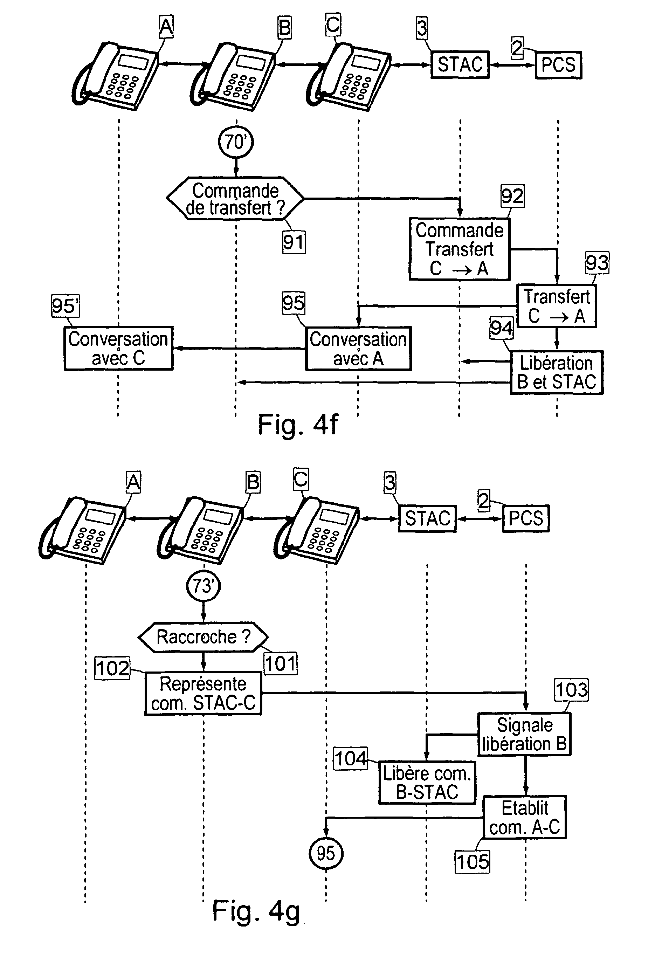

A l'étape 70', l'utilisateur du terminal B a la possibilité de faire des va-et-vient entre les terminaux A et B (figure 4d), raccrocher ou effectuer un rétro-appel (figures 4e et 4g), et émettre une commande de transfert (figure 4f).

Sur la figure 4d, l'utilisateur du terminal B en communication avec le terminal C via le serveur 3 émet une commande de va-et-vient vers son équipement 5 (étape 71). Cette action a pour effet de mettre en garde le terminal C qui était en communication par l'intermédiaire du serveur 3 (étapes 72, 72'), et de mettre le terminal B en communication avec le terminal A (étapes 73, 73'). Dans cet état, l'utilisateur du terminal B peut raccrocher ou effectuer un rétro-appel (figure 4g), ou bien émettre à nouveau une commande de va-et-vient (étape 74). Cette dernière action a pour effet de mettre en garde le terminal A (étape 75), et de mettre le terminal B en communication avec le terminal C par l'intermédiaire du serveur 3 en revenant à l'étape 70.

Sur la figure 4e, l'utilisateur du terminal B est en communication avec le terminal C via le serveur 3, et raccroche ou émet une commande de rétro-appel vers son équipement 5 (étape 81). Cette action a pour effet sur l'équipement 5 du terminal B de libérer le serveur 3 (étape 82), lequel libère la communication 15 avec le terminal C (étape 83). Le terminal B reprend la communication avec le terminal A (étape 84) et se retrouve dans la même situation qu'à l'étape 53. Dans le cas du raccrochement du terminal B, la communication avec le terminal A est rétablie par l'équipement 5 du terminal B qui représente cette communication à l'utilisateur.

Sur la figure 4f, l'utilisateur du terminal B est en communication avec le terminal C via le serveur 3, et émet une commande de transfert à l'étape 91, par exemple en composant les touches "*#" de son terminal. Cette commande est détectée par le serveur 3 qui émet à l'étape suivante 92 à destination du PCS une commande de transfert pour établir une communication entre les terminaux A et C, et la libération des communications vers le serveur 3 et vers le terminal B. Aux étapes suivantes 93, 94, le PCS met en communication les terminaux A et C par regroupement des tickets de facturation 13 et 16 et libère les liens de communication vers le terminal B et vers le serveur 3. Aux étapes suivantes 95, 95', les terminaux A et C sont en communication.

Sur la figure 4g, l'utilisateur du terminal B est en communication avec le terminal A (étapes 73, 73'), tandis que la communication avec le serveur 3 est en garde sur son équipement 5. A l'étape 101, l'utilisateur raccroche le terminal B. Cette action a pour effet sur l'équipement 5 du terminal B de libérer le demi-appel du terminal B vers le terminal A, et de représenter la communication du terminal B vers le terminal C via le serveur 3 (étape 102). Parallèlement, le PCS signale au serveur 3 que le demi-appel vers le terminal B a été libéré (étape 103), et met en communication les terminaux A et C par regroupement des tickets de facturation 13 et 16 (étape 105). A la réception de ce signal, le serveur 3 libère les communications vers le terminal B, et la procédure se poursuit comme à l'étape 95 où les terminaux A et B sont en communication directe.

Une variante de l'invention ne faisant pas intervenir d'identifiant d'appel attribué à la première communication entre les terminaux A et B consiste à réaliser un aboutement standard au niveau de l'équipement 5 entre le terminal A et le serveur 3. Préalablement, la communication entre les terminaux A et B a été marquée dans le réseau 1 à réacheminer vers le serveur 3 en fin d'appel entre les terminaux A et B. Le serveur 3 ayant préalablement reçu une commande de transfert vers le terminal C, il procède à la libération de la communication vers le terminal B, ce qui entraîne la libération du lien de communication du terminal B vers le réseau. Le serveur reçoit alors la communication vers le terminal A, qu'il peut ensuite acheminer vers le terminal C pour réaliser le transfert d'appel.

Cette variante nécessite toutefois de gérer les conflits dans le cas où ce mécanisme est mis en oeuvre simultanément pour plusieurs appels. Dans ce cas, plusieurs communications vers un terminal A peuvent en effet être réacheminées vers le serveur. Le serveur déclenche alors une temporisation pour que les communications qui ne font pas l'objet d'un réacheminement se libèrent pas abandon des demandeurs. A la fin de la temporisation, si le serveur se retrouve avec plus d'une communication (du type avec le terminal A), celles-ci sont alors réacheminées vers leurs anciens correspondants (du type terminal B).

Si la description qui précède a été effectuée dans le cadre d'un réseau téléphonique RTC, il va de soi que l'invention peut également être mise en oeuvre dans un réseau téléphonique en voix sur IP dans lequel les fonctions décrites du PCS sont réalisées par un serveur d'appel ou un portier ("gatekeeper").

## Revendications

1. Procédé de transfert d'appel pour transférer un appel en cours entre un premier terminal (A) et un second terminal (B) par l'intermédiaire d'un réseau de télécommunication (1), vers un troisième terminal (C), le procédé comprenant des étapes préalables au cours desquelles le premier terminal compose un numéro d'appel du second terminal, le numéro est traité par le réseau pour acheminer l'appel vers le second terminal et ainsi établir une communication entre le premier et le second terminal,
**caractérisé en ce qu'**il comprend des étapes au cours desquelles :
- le second terminal (B) commande la mise en garde de la communication avec le premier terminal (A), et appelle un serveur (3) de transfert d'appel connecté au réseau (1),
- une fois qu'une communication est établie entre le second terminal et le serveur de transfert d'appel, le second terminal fournit au serveur de transfert d'appel un numéro d'appel d'un troisième terminal (C) vers lequel l'appel doit être transféré,
- le serveur de transfert d'appel émet vers le réseau une commande d'établissement d'une communication avec le troisième terminal,
- lorsque le troisième terminal décroche, il est mis en communication avec le premier terminal, et les communications du second terminal avec le réseau et le serveur de transfert d'appel sont interrompues.

2. Procédé selon la revendication 1,
**caractérisé en ce qu'**au moment de l'établissement de la communication entre le premier et le second terminal (A, B), le réseau (1) attribue à la communication un identifiant d'appel qui est transmis au second terminal, et une fois que la communication est établie entre le second terminal et le serveur (3) de transfert d'appel, le second terminal fournit au serveur de transfert d'appel l'identifiant de la communication entre le premier et le second terminal.

3. Procédé selon la revendication 2,
**caractérisé en ce que** le réseau (1) attribue un identifiant d'appel à la communication si le numéro d'appel composé par le premier terminal est un numéro d'appel spécial du second terminal.

4. Procédé selon la revendication 2 ou 3,
**caractérisé en ce que** l'identifiant de la communication entre le premier et le second terminal est transmis au second terminal (B) et au serveur (3) de transfert d'appel dans la signalisation d'appel du protocole RNIS, ou sous la forme de signaux DTMF.

5. Procédé selon l'une des revendications 1 à 4,
**caractérisé en ce qu'**à la suite de l'émission vers le réseau (1) d'une commande d'établissement d'une communication avec le troisième terminal (C), une communication est établie entre le second terminal (B) et le troisième terminal par l'intermédiaire du serveur (3) de transfert d'appel.

6. Procédé selon la revendication 5,
**caractérisé en ce qu'**à la suite d'une commande de va-et-vient émise par le second terminal (B), le second terminal bascule entre la communication avec le premier terminal (A) et la communication avec le troisième terminal (C) par l'intermédiaire du serveur (3) de transfert d'appel.

7. Serveur de transfert d'appel pour transférer un appel en cours entre un premier terminal (A) et un second terminal (B) par l'intermédiaire d'un réseau de télécommunication (1), vers un troisième terminal (C),
**caractérisé en ce qu'**il comprend des moyens de traitement (20, 21) conçus pour:
- recevoir une commande de transfert provenant du second terminal (B) par l'intermédiaire du réseau (1), la commande de transfert comportant un numéro d'appel d'un troisième terminal (C) vers lequel le transfert doit être effectué,
- émettre vers le réseau une commande d'établissement d'une communication avec le troisième terminal vers lequel le transfert doit être effectué, à la suite de la réception de la commande de transfert, et
- détecter le décrochage du troisième terminal, et à la suite de cette détection, commander au réseau la mise en communication du troisième terminal avec le premier terminal, et libérer la communication avec le second terminal.

8. Serveur de transfert d'appel selon la revendication 7,
**caractérisé en ce que** les moyens de traitement (20, 21) sont en outre conçus pour recevoir avec la commande de transfert un identifiant de la communication entre le premier et le second terminal (A, B).

9. Serveur de transfert d'appel selon la revendication 7 ou 8,
**caractérisé en ce que** les moyens de traitement (20, 21) sont en outre conçus pour établir une communication avec le troisième terminal (C) et mettre en communication celui-ci avec le second terminal (B).

10. Serveur de transfert d'appel selon l'une des revendications 7 à 9,
**caractérisé en ce que** les moyens de traitement (20, 21) sont en outre conçus pour émettre des messages vocaux à destination du second terminal (B).

11. Serveur de transfert d'appel selon l'une des revendications 7 à 10,
**caractérisé en ce qu'**il comprend des moyens (22) pour se connecter à un point de commande de services (2) de réseau intelligent connecté au réseau (1), les moyens de traitement (20, 21) étant conçus pour envoyer au point de commande de services des commandes d'acheminement d'appel, des commandes de transfert d'appel, et des commandes de libération d'appel, et pour recevoir du point de commande de services des signaux de libération d'appel et des avis d'échec à la suite d'une commande d'établissement d'appel.

12. Terminal comprenant :
- des moyens pour se connecter à un réseau de télécommunication (1),
- des moyens pour établir une communication avec un second terminal par l'intermédiaire du réseau de télécommunication, et
- des moyens pour commander la mise en garde d'une communication établie avec le second terminal par l'intermédiaire du réseau de télécommunication,
**caractérisé en ce qu'**il comprend en outre :
- des moyens pour recevoir un identifiant d'appel à la suite de l'établissement de la communication avec le second terminal, et
- des moyens pour appeler un serveur de transfert d'appel (3) connecté au réseau (1), et lui transmettre l'identifiant d'appel, et un numéro d'appel d'un troisième terminal, à la suite de la mise en garde du second terminal.

## Claims

1. Call transfer method for transferring a call in progress between a first terminal (A) and a second terminal (B) via a telecommunication network (1), to a third terminal (C), the method comprising preliminary steps during which the first terminal dials a call number of the second terminal, the number is processed by the network to route the call to the second terminal and so set up a communication between the first and the second terminal,
**characterized in that** it comprises steps during which:
- the second terminal (B) orders the communication with the first terminal (A) to be put on hold, and calls a call transfer server (3) connected to the network (1),
- once a communication is set up between the second terminal and the call transfer server, the second terminal provides the call transfer server with a call number of a third terminal (C) to which the call must be transferred,
- the call transfer server sends the network a command to set up a communication with the third terminal,
- when the third terminal answers, it is put in communication with the first terminal, and the communications of the second terminal with the network and the call transfer server are interrupted.

2. Method according to Claim 1,
**characterized in that**, at the moment the communication between the first and the second terminals (A, B) is set up, the network (1) assigns the communication a call identifier which is transmitted to the second terminal, and once the communication is set up between the second terminal and the call transfer server (3), the second terminal supplies the call transfer server with the identifier of the communication between the first and the second terminals.

3. Method according to Claim 2,
**characterized in that** the network (1) assigns a call identifier to the communication if the call number dialled by the first terminal is a special call number of the second terminal.

4. Method according to Claim 2 or 3,
**characterized in that** the identifier of the communication between the first and the second terminals is transmitted to the second terminal (B) and to the call transfer server (3) in the call signalling of the ISDN protocol, or in the form of DTMF signals.

5. Method according to one of Claims 1 to 4,
**characterized in that**, following the sending to the network (1) of a command to set up a communication with the third terminal (C), a communication is set up between the second terminal (B) and the third terminal via the call transfer server (3).

6. Method according to Claim 5,
**characterized in that**, following a double call command sent by the second terminal (B), the second terminal toggles between the communication with the first terminal (A) and the communication with the third terminal (C) via the call transfer server (3).

7. Call transfer server for transferring a call in progress between a first terminal (A) and a second terminal (B) via a telecommunication network (1), to a third terminal (C),
**characterized in that** it comprises processing means (20, 21) designed to:
- receive a transfer command originating from the second terminal (B) via the network (1), the transfer command including a call number of a third terminal (C) to which the transfer must be made,
- send to the network a command to set up a communication with the third terminal to which the transfer must be made, following the reception of the transfer command, and
- detect the answering of the third terminal, and, following this detection, command the network to place the third terminal in communication with the first terminal, and release the communication with the second terminal.

8. Call transfer server according to Claim 7,
**characterized in that** the processing means (20, 21) are also designed to receive with the transfer command an identifier of the communication between the first and the second terminals (A, B).

9. Call transfer server according to Claim 7 or 8,
**characterized in that** the processing means (20, 21) are also designed to set up a communication with the third terminal (C) and put the latter in communication with the second terminal (B) .

10. Call transfer server according to one of Claims 7 to 9,
**characterized in that** the processing means (20, 21) are also designed to send voice messages intended for the second terminal (B) .

11. Call transfer server according to one of Claim 7 to 10,
**characterized in that** it comprises means (22) for connecting to an intelligent network service control point (2) connected to the network (1), the processing means (20, 21) being designed to send to the service control point call routing commands, call transfer commands and call release commands, and to receive from the service control point call release signals and notifications of failure following a call setup command.

12. Terminal comprising:
- means for connecting to a telecommunication network (1),
- means far setting up a communication with a second terminal via the telecommunication network, and
- means for commanding a communication set up with the second terminal via the telecommunication network to be placed on hold,
**characterized in that** it also comprises:
- means for receiving a call identifier following the setting up of the communication with the second terminal, and
- means for calling a call transfer server (3) connected to the network (1), and transmitting to it the call identifier, and a call number of a third terminal, after the second terminal has been placed on hold.

## Patentansprüche

1. Verfahren zur Anruf weiterschaltung, um einen zwischen einem ersten Endgerät (A) und einem zweiten Endgerät (B) über ein Telekommunikationsnetz (1) bestehenden Anruf zu einem dritten Endgerät (C) weiterzuschalten, wobei das Verfahren vorhergehende Schritte aufweist, während denen das erste Endgerät eine Rufnummer des zweiten Endgeräts wählt, die Nummer vom Netz verarbeitet wird, um den Anruf zum zweiten Endgerät weiterzuleiten und so eine Verbindung zwischen dem ersten und dem zweiten Endgerät herzustellen,
**dadurch gekennzeichnet, dass** es Schritte aufweist, während denen:
- das zweite Endgerät (B) das Halten der Verbindung mit dem ersten Endgerät (A) befiehlt und einen Anrufweiterschaltungsserver (3) anruft, der mit dem Netz (1) verbunden ist,
- wenn eine Verbindung zwischen dem zweiten Endgerät und dem Anrufweiterschaltungsserver aufgebaut ist, das zweite Endgerät an den Anrufweiterschaltungsserver eine Rufnummer eines dritten Endgeräts (C) liefert, an das der Anruf weitergeschaltet werden soll ,
- der Anrufweiterschaltungsserver einen Befehl zum Aufbau einer Verbindung mit dem dritten Endgerät an das Netz sendet,
- wenn das dritte Endgerät abhebt, es mit dem ersten Endgerät verbunden wird, und die Verbindungen des zweiten Endgeräts mit dem Netz und dem Anrufweiterschaltungsserver unterbrochen werden.

2. Verfahren nach Anspruch 1, **dadurch gekennzeichnet, dass** im Moment des Aufbaus der Verbindung zwischen dem ersten und dem zweiten Endgerät (A, B) das Netz (1) der Verbindung eine Anrufkennung zuteilt, die an das zweite Endgerät übertragen wird, und wenn die Verbindung zwischen dem zweiten Endgerät und dem Anrufweiterschaltungs server (3) aufgebaut ist, das zweite Endgerät an den Anrufweiterschaltungsserver die Kennung der Verbindung zwischen dem ersten und dem zweiten Endgerät liefert.

3. Verfahren nach Anspruch 2, **dadurch gekennzeichnet, dass** das Netz (1) der Verbindung eine Anrufkennung zuteilt, wenn die vom ersten Endgerät gewählte Nummer eine spezielle Rufnummer des zweiten Endgeräts ist.

4. Verfahren nach Anspruch 2 oder 3 , **dadurch gekennzeichnet, dass** die Kennung der Verbindung zwischen dem ersten und dem zweiten Endgerät an das zweite Endgerät (B) und an den Anrufweiterschaltungsserver (3) in der Anrufsignalisierung des ISDN-Protokolls oder in Form von DTMF-Signalen übertragen wird.

5. Verfahren nach einem der Ansprüche 1 bis 4, **dadurch gekennzeichnet, dass** nach dem Senden eines Befehls zum Aufbau einer Verbindung mit dem dritten Endgerät (C) an das Netz (1) eine Verbindung zwischen dem zweiten Endgerät (B) und dem dritten Endgerät über den Anrufweiterschaltungsserver (3) aufgebaut wird.

6. Verfahren nach Anspruch 5, **dadurch gekennzeichnet, dass** nach einem vom zweiten Endgerät (B) ausgegebenen Wechselbefehl das zweite Endgerät über den Anrufweiterschaltungsserver (3) zwischen der Verbindung mit dem ersten Endgerät (A) und der Verbindung mit dem dritten Endgerät (C) umschaltet.

7. Anrufweiterschaltungsserver, um einen zwischen einem ersten Endgerät (A) und einem zweiten Endgerät (B) über ein Telekommunikationsnetz (1) bestehenden Anruf zu einem dritten Endgerät (C) weiterzuschalten,
**dadurch gekennzeichnet, dass** es Verarbeitungsmittel (20, 21) aufweist, die konzipiert sind, um:
- einen vom zweiten Endgerät (B) über das Netz (1) kommenden Weiterschaltungsbefehl zu empfangen, wobei der Weiterschaltungsbefehl eine Rufnummer eines dritten Endgeräts (C) aufweist, an das die Weiterschaltung durchgeführt werden soll,
- einen Befehl zum Aufbau einer Verbindung mit dem dritten Endgerät an das Netz zu senden, an das die Weiterschaltung durchgeführt werden soll, nach Empfang des Weiterschaltungsbefehls, und
- das Abheben des dritten Endgeräts zu erfassen, und nach dieser Erfassung dem Netz die Verbindung des dritten Endgeräts mit dem ersten Endgerät zu befehlen und die Verbindung mit dem zweiten Endgerät freizugebem.

8. Anrufweiterschaltungsserver nach Anspruch 7, **dadurch gekennzeichnet, dass** die Verarbeitungsmittel (20, 21) außerdem konzipiert sind, um mit dem Weiterschaltungsbefehl eine Kennung der Verbindung zwischen dem ersten und dem zweiten Endgerät (A, B) zu empfangen.

9. Anrufweiterschaltungsserver nach Anspruch 7 oder 8, **dadurch gekennzeichnet, dass** die Verarbeitungsmittel (20 , 21) außerdem konzipiert sind, um eine Verbindung mit dem dritten Endgerät (C) aufzubauen und dieses mit dem zweiten Endgerät (B) zu verbinden.

10. Anrufweiterschaltungsserver nach einem der Ansprüche 7 bis 9, **dadurch gekennzeichnet, dass** die Verarbeitungsmittel (20, 21) außerdem konzipiert sind, um Sprachmitteilungen an das zweite Endgerät (B) zu senden.

11. Anrufweiterschaltungs server nach einem der Ansprüche 7 bis 10, **dadurch gekennzeichnet, dass** er Mittel (22) aufweist, um sich mit einer Dienststeuereinheit (2) eines Intelligenten Netzes zu verbinden, das mit dem Netz (1) verbunden ist, wobei die Verarbeitungsmittel (20, 21) konzipiert sind, um an die Dienststeuereinheit Anrufweiterleitungsbefehle, Anrufweiterschaltungsbefehle und Anruffreigabebefehle zu senden, und um von der Dienststeuereinheit Ruffreigabesignale und Fehlschlaganzeigen nach einem Anrufaufbaubefehl zu empfangen.

12. Endgerät, das aufweist:
- Mittel, um sich mit einem Telekommunikationsnetz (1) zu verbinden,
- Mittel, um über das Telekommunikationsnetz eine Verbindung mit einem zweiten Endgerät aufzubauen, und
- Mittel, um das Halten einer Verbindung zu befehlen, die mit dem zweiten Endgerät über das Telekommunikationsnetz aufgebaut wurde,
**dadurch gekennzeichnet, dass** es außerdem aufweist:
- Mittel, um nach dem Aufbau der Verbindung mit dem zweiten Endgerät eine Anrufkennung zu empfangen, und
- Mittel, um einen mit dem Netz (1) verbundenen Anrufweiterschaltungsserver (3) anzurufen und an ihn die Anrufkennung und eine Rufnummer eines dritten Endgeräts nach dem Halten des zweiten Endgeräts zu übertragen.
